(19) Europäisches Patentamt / European Patent Office / Office européen des brevets

(11) **EP 2 832 697 A1**

(12) **EUROPEAN PATENT APPLICATION**
published in accordance with Art. 153(4) EPC

(43) Date of publication:
**04.02.2015 Bulletin 2015/06**

(51) Int Cl.:
*C01F 7/00* $^{(2006.01)}$    *C08K 3/24* $^{(2006.01)}$
*C08K 9/04* $^{(2006.01)}$    *C08L 101/00* $^{(2006.01)}$
*C09C 1/00* $^{(2006.01)}$    *C09C 1/02* $^{(2006.01)}$
*C09C 1/40* $^{(2006.01)}$    *C09C 3/08* $^{(2006.01)}$
*C09C 3/12* $^{(2006.01)}$

(21) Application number: 13770289.0

(22) Date of filing: 25.03.2013

(86) International application number:
**PCT/JP2013/059790**

(87) International publication number:
**WO 2013/147285 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2012 JP 2012069622**

(71) Applicant: Kyowa Chemical Industry Co., Ltd
Takamatsu-shi, Kagawa 761-0113 (JP)

(72) Inventors:
• **NAKAMURA, Tsukasa**
Sakaide-shi
Kagawa 762-0012 (JP)
• **KUROGI, Yusuke**
Sakaide-shi
Kagawa 762-0012 (JP)

(74) Representative: **Raynor, Stuart Andrew**
J A Kemp
14 South Square
Gray's Inn
London WC1R 5JJ (GB)

(54) **METHOD FOR MANUFACTURING HYDROTALCITE PARTICLES**

(57)    A process for producing hydrotalcite particles having an average secondary particle diameter of 1 to 100 nm.

The production process is to produce hydrotalcite particles having an average secondary particle diameter measured by a frequency analyzing method of 1 to 100 nm, comprising reacting a mixed aqueous solution of a magnesium salt and an aluminum salt with an alkali substance and an interlaminar anion in a forced thin-film type micro-reactor having a reactive site clearance of 1 to 30 μm, wherein the molar ratio of the alkali substance to the total of metal magnesium and metal aluminum is 2 to 15.

Fig. 1

EP 2 832 697 A1

**Description**

TECHNICAL FIELD

The present invention relates to a process for producing hydrotalcite fine particles.

BACKGROUND ART

Hydrotalcite particles have been known for a long time and have the ability of inactivating an acid through anion exchange as well as excellent acid neutralizing ability. They also have the special abilities of substituting a constituent element and changing the type of an anion. Making use of these properties, they are used in a wide variety of fields such as medical antacids, adsorbents, neutralizers for the catalyst residue of a polyolefin-based resin and stabilizers for chlorine-based resins. For example, the following patent documents 1 to 3 are known for the process for synthesizing hydrotalcite particles and use of the hydrotalcite particles.

The improvement of the transparency of a polyolefin resin composition used for application devices when it is mixed with hydrotalcite as an additive is now desired. Fine particles which can be used for this purpose are needed.

Meanwhile, a micro-reactor is defined as a small-scale chemical reactor having a reactive site with one side width smaller than 1 mm or 500 $\mu$m and excellent in the controllability of detailed conditions such as energy efficiency, reaction rate, yield, safety, temperature control, high-speed uniform mixing, the improvement of concentration uniformity and scale-up as compared with other apparatuses for carrying out a larger-scale reaction. A small Y-shaped tube micro-reactor is famous, and it is known that this micro-reactor can be used to synthesize nano-particles. However, since the reactive site is a very small space, the crystallization reaction of hydrotalcite particles causes the clogging of the pipe, whereby hydrotalcite particles can be synthesized only in very low concentration.

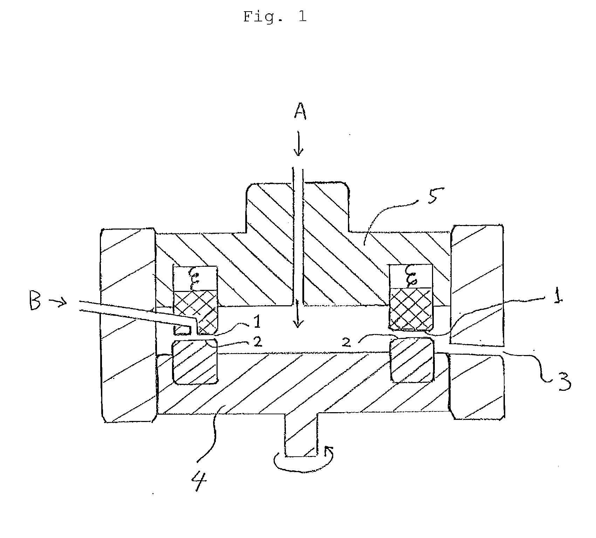

Although a forced thin-film type micro-reactor as shown in patent document 4 has a very small reactive site having a size of 1 to 30 $\mu$m, a lower disk shown in the apparatus diagram of Fig. 1 turns so that a compound can be synthesized in high concentration.

    (Patent Document 1) JP-A 49-3760
    (Patent Document 2) JP-A 61-174270
    (Patent Document 3) WO99/015909
    (Patent Document 4) JP-A 2009-131831

DISCLOSURE OF THE INVENTION

It is an object of the present invention to provide a process for producing hydrotalcite particles of a nano-order level.

The inventors of the present invention conducted studies on a process for producing hydrotalcite particles of a nano-order level. As a result, they found that when hydrotalcite is synthesized in a forced thin-film type micro-reactor by a reaction method, hydrotalcite fine particles are obtained. The present invention was accomplished based on this finding. That is, the present invention is a process for producing hydrotalcite particles having an average secondary particle diameter measured by a frequency analyzing method of 1 to 100 nm, comprising reacting a mixed aqueous solution of a magnesium salt and an aluminum salt, an alkali substance and an interlaminar anion in a forced thin-film type micro-reactor having a reactive site clearance of 1 to 30 $\mu$m.

BRIEF DESCRIPTION OF THE DRAWINGS

Fig. 1 shows an example of the forced thin-film type micro-reactor.

BEST MODE FOR CARRYING OUT THE INVENTION

(reaction raw materials)

In the production process of the present invention, a mixed aqueous solution of a magnesium salt and an aluminum salt, an alkali substance and an interlaminar anion are reacted with one another as reaction raw materials.

Examples of the magnesium salt include magnesium chloride, magnesium nitrate and magnesium sulfate. Examples of the aluminum salt include aluminum chloride, aluminum nitrate and aluminum sulfate. The molar ratio (Mg/Al) of metal magnesium to metal aluminum to be reacted is preferably 1 to 12, more preferably 2 to 5.

The concentration of the magnesium salt in the mixed aqueous solution of the magnesium salt and the aluminum salt is preferably 0.1 to 3 mol/L, more preferably 0.2 to 2 mol/L, much more preferably 0.3 to 1.5 mol/L. The concentration of the aluminum salt is preferably 0.05 to 2 mol/L, more preferably 0.1 to 1.5 mol/L.

An aqueous solution of caustic soda, ammonia or potassium hydroxide is used as the alkali substance. The molar ratio of the alkali substance to be reacted to the total of metal magnesium and metal aluminum is preferably 2 to 15, more preferably 2.2 to 10. When this ratio falls below 2, dispersibility deteriorates, whereby the average secondary particle diameter becomes larger than 100 nm.

An aqueous solution of sodium carbonate or ammonium carbonate is used as the interlaminar anion. The molar ratio of the interlaminar anion to be reacted to metal aluminum is preferably 0.0 to 10, more preferably 1 to 5. The concentration of the interlaminar anion aqueous solution is preferably 0.001 to 3 mol/L, more preferably 0. 002 to 2 mol/L.

The reaction temperature is preferably 5 to 90°C, more preferably 10 to 80°C, much more preferably 15 to 70°C.

(micro-reactor)

In the production process of the present invention, a reaction is carried out in a forced thin-film type micro-reactor having a reactive site clearance of 1 to 30 $\mu$m.

An example of the forced thin-film type micro-reactor used in the present invention is shown in Fig. 1. Preferably, the forced thin-film type micro-reactor has a reactive site formed by a first processing surface (1) and a second processing surface (2) both of which are opposed to each other, turn relative to each other and can approach or part from each other relatively, and produces force in a direction that the two processing surfaces part from each other by the supply pressure of the raw materials and a separate force is applied for moving the two processing surfaces in a direction that they approach each other, so that the reactive site is kept in a very small space.

The mixed aqueous solution of a magnesium salt and an aluminum salt (A) as a raw material is supplied into the reactive site from the center part of the reactor with a predetermined pressure. The alkali substance and the interlaminar anion (B) as raw materials are supplied into the reactive site from a supply port different from that of the mixed aqueous solution of a magnesium salt and an aluminum salt (A). Slurry containing particulate hydrotalcite produced by the reaction is discharged from a discharge port (3). When the forced thin-film type micro-reactor is used, a reaction can be carried out in the state of a thin film fluid.

In Fig. 1, a rotary disk (4) turns and a fixed disk (5) does not turn. The rotary disk (4) and the fixed disk (5) may turn relative to each other, one of them may turn and the other may remain still, or they may turn in opposite directions. The relative revolution of the rotary disk (4) is preferably 400 to 3,500 rpm, more preferably 500 to 2, 000 rpm.

The gap between the first processing surface (1) and the second processing surface (2), that is, the reactive site clearance is 1 to 30 $\mu$m, preferably 3 to 20 $\mu$m, more preferably 5 to 15 $\mu$m.

The first processing surface (1) is like a hollow disk and fixed to the fixed disk (4). The second processing surface (2) is like a hollow disk and fixed to the rotary disk (4).

The flow rate in the reactive site of the mixed aqueous solution of a magnesium salt and an aluminum salt (A) is preferably 10 to 250 ml/sec, more preferably 15 to 200 ml/sec. The flow rate in the reactive site of the alkali substance and the interlaminar anion (B) is preferably 10 to 250 ml/sec, more preferably 15 to 200 ml/sec.

The ULREA SS-11 micro-reactor of M Technique Co. , Ltd. may be used as the forced thin-film type micro-reactor. This apparatus is a forced thin-film type micro-reactor having a reactive site clearance of 1 to 30 $\mu$m and a mechanism for discharging hydrotalcite slurry crystallized by the rotation of a disk. This is a continuous reactor in which hydrotalcite slurry is discharged to the outside of the apparatus right after a crystallization reaction in the disk. Therefore, even when the reactive site clearance is 1 to 30 $\mu$m, a reaction can be carried out in high concentration without the occlusion of the reactor by the formed crystallized substance, thereby making it possible to obtain nano-particles.

(hydrotalcite particles)

The hydrotalcite particles obtained by the present invention have an average secondary particle diameter measured by a frequency analyzing method of 1 to 100 nm, preferably 10 to 90 nm, more preferably 20 to 80 nm.

Although the composition of the hydrotalcite particles is not particularly limited, particles having composition represented by the following formula (1) are preferred.

$$[M_1^{2+}]_{y1}(M_2^{2+})_{y2}]_{1-x}M_x^{3+}(OH)_2A^{n-}_{x/n}\cdot mH_2O \qquad (1)$$

In the above formula, $M_1^{2+}$ is at least one divalent metal selected from the group consisting of Mg, Zn, Ca, Sr, Cu, Fe, Mn, Co, Ni, Sn, Pb, Cd and Ba. $M_2^{2+}$ is at least one divalent metal selected from the group consisting of Zn, Ca, Sr, Cu, Fe, Mn, Co, Ni, Sn, Pb, Cd and Ba. $M^{3+}$ is a trivalent metal such as Al or Fe.

$A^{n-}$ is an n-valent anion. Examples of the anion include chlorine ion and carbonate ion.

X, $y_1$, $y_2$ and m are positive numbers represented by the following expressions.

$$0 < x \leqq 0.5$$

$$0.5 \leqq y_1 + y_2 < 1$$

$$0 \leqq m < 2$$

In the above formula (1), preferably, $M_1^{2+}$ is Mg, $M_2^{2+}$ is Zn, and $M^{3+}$ is Al.

(surface treatment)

Although the hydrotalcite particles used in the present invention may be mixed with a resin as they are, the particles may be treated with a surface treating agent before use.

The surface treating agent is preferably at least one selected from the group consisting of higher fatty acids, sulfuric acid esters of a higher alcohol, titanate coupling agents, silane coupling agents, aluminate coupling agents, esters of a polyhydric alcohol and a fatty acid, phosphoric acid esters and anionic surfactants.

The higher fatty acids include higher fatty acids having 10 or more carbon atoms such as stearic acid, erucic acid, palmitic acid, lauric acid and behenic acid. Alkali metal salts of these higher fatty acids may also be used.

The sulfuric acid esters of a higher alcohol include steary alcohol sulfuric acid esters and oleyl alcohol sulfuric acid esters.

The titanate coupling agents include isopropyl triisostearoyl titanate, isopropyl tris(dioctylpyrophosphate)titanate, isopropyl tri(N-aminoethyl-aminoethyl)titanate and isopropyl tridecylbenzene sulfonyl titanate.

The silane coupling agents include vinyl ethoxysilane, vinyl-tris(2-methoxy-ethoxy)silane, gamma-methacryloxypropyltrimethoxysilane, gamma-aminopropyltrimethoxysilane, beta-(3,4-epoxycyclohexyl)ethyltrimethoxysilane, gamma-glycidoxypropyltrimethoxysilane and gamma-mercaptopropyltrimethoxysilane.

The aluminate coupling agents include acetoalkoxyaluminum diisopropylate.

The esters of a polyhydric alcohol and a fatty acid include glycerin monostearate and glycerin monooleate.

The phosphoric acid esters include monoesters and diesters of orthophosphoric acid and oleyl alcohol and mixtures thereof, and monoesters and diesters of orthophosphoric acid and stearyl alcohol and mixtures thereof. Acid and alkali metal salts and amine salts of these esters may also be used.

The anionic surfactants include sulfuric acid ester salts of polyethylene glycol ether, amide-linked sulfuric acid ester salts, ester-linked sulfuric acid ester salts, ester-linked sulfonates, amide-linked sulfonic acid salts, ether-linked sulfonic acid salts, ether-linked alkyl aryl sulfonic acid salts, ester-linked alkyl aryl sulfonic acid salts and amide-linked alkyl aryl sulfonic acid salts.

To coat the surfaces of the hydrotalcite particles with the above surface treating agent, a wet or dry process known per se may be employed. For example, in the wet process, the surface treating agent in a liquid or emulsion form is added to hydrotalcite particle slurry and mechanically fully mixed with the particles at a temperature up to about 100°C. In the dry process, the surface treating agent in a liquid, emulsion or solid form is added to the hydrotalcite particles while they are fully stirred by means of a mixer such as a Henschel mixer to be fully mixed with the particles under heating or non-heating.

The amount of the surface treating agent to be added may be suitably selected but preferably not more than 10 wt% based on the weight of the hydrotalcite particles.

Rinsing, dehydration, granulation, drying, milling and classification are suitably selected as required and carried out on the surface treated hydrotalcite particles to produce a final product.

The hydrotalcite particles of the present invention may be contained in a resin. The resin is preferably a thermoplastic resin. Examples of the thermoplastic resin include olefin ($\alpha$-olefin) polymers and copolymers having 2 to 8 carbon atoms such as polyethylene, polypropylene, ethylene-propylene copolymer, polybutene and poly(4-methylpentene-1), copolymers of these olefins having 2 to 8 carbon atoms and dienes, ethylene-acrylate copolymer, polystyrene, ABS resin, AAS resin, AS resin, MBS resin, ethylene-vinyl chloride copolymer resin, ethylene-vinyl acetate copolymer resin, ethylene-vinyl chloride-vinyl acetate graft polymer resin, vinylidene chloride, polyvinyl chloride, chlorinated polyethylene, chlorinated polypropylene, vinyl chloride-propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate and methacrylic resin.

As polyolefins, polypropylene-based resins such as polypropylene homopolymer and ethylene-propylene copolymer, polyethylene-based resins such as high-density polyethylene, low-density polyethylene, linear low-density polyethylene ultralow-density polyethylene, EVA (ethylene vinyl acetate resin), EEA (ethylene ethyl acrylate resin), EMA (ethylene methyl acrylate copolymer resin), EAA (ethylene acrylic acid copolymer resin) and super high molecular weight polyethylene, and olefin ($\alpha$-ethylene) polymers and copolymers having 2 to 6 carbon atoms such as polybutene and poly(4-methylpentene-1) are enumerated. Out of these, polyethylene, polypropylene, polybutene, poly(4-methylpentene-1) and copolymers thereof are particularly suitable for use in the composition of the present invention. Although these polyolefins contain halogen derived from a polymerization catalyst, the composition of the present invention is extremely effective for thermal deterioration caused by the halogen.

Further, thermosetting resins such as epoxy resin, phenolic resin, melamine resin, unsaturated polyester resin, alkyd resin and urea resin may also be used. Synthetic rubbers such as EPDM, butyl rubber, isoprene rubber, SBR, NBR and chlorosulfonated polyethylene may be used as well. The resin is preferably a polyolefin, polyvinyl chloride or rubber.

The amount of the hydrotalcite particles to be mixed with the resin is 0.001 to 300 parts by weight, preferably 0.01 to 200 parts by weight based on 100 parts by weight of the resin. This preferred amount differs according to purpose. For example, when the hydrotalcite particles are used as a stabilizer, the amount of the hydrotalcite particles is 0.001 to 10 parts by weight, preferably 0.01 to 5 parts by weight based on 100 parts by weight of the resin. For example, when the hydrotalcite particles are used as a flame retardant, the amount of the hydrotalcite particles is 10 to 300 parts by weight, preferably 30 to 200 parts by weight based on 100 parts by weight of the resin.

To prepare the resin composition, means for mixing the hydrotalcite particles with the resin is not particularly limited. For instance, the same means as commonly used known means for mixing a stabilizer and a filler with these resins may be used to mix the hydrotalcite particles with another resin blending material or with a synthetic resin separately as uniformly as possible. For example, known mixing means such as a ribbon blender, high-speed mixer, kneader, pelletizer or extruder is used to mix the hydrotalcite particles, or a suspension of a heat deterioration agent comprising the hydrotalcite particles as an effective component is added to and mixed with slurry after polymerization under agitation and dried.

The resin composition of the present invention may be mixed with other commonly used additives in addition to the above components. The additives include an antioxidant, ultraviolet inhibitor, antistatic agent, pigment, foaming agent, plasticizer, filler, reinforcing agent, organic halogen flame retardant, crosslinking agent, optical stabilizer, ultraviolet absorbent, lubricant and other inorganic and organic heat stabilizers.

When the hydrotalcite particles of the present invention are used as a flame retardant for resins, the resin composition is substantially composed of the above resin and the hydrotalcite particles but may further comprise a flame retarding aid. By blending this flame retarding aid, the content of the hydrotalcite particles can be reduced and the flame retarding effect can be enhanced. The flame retarding aid is preferably red phosphorus, carbon powder or a mixture thereof. As red phosphorus may be used ordinary red phosphorus for flame retardants, or red phosphorus whose surface has been coated with a thermosetting resin, polyolefin, carboxylic acid polymer, titanium oxide or titanium aluminum condensate. The carbon powder is carbon black, activated carbon or graphite and may be prepared by an oil furnace method, gas furnace method, channel method, thermal method or acetylene method.

A molded article can be manufactured by molding the above resin composition.

EXAMPLES

The following examples and comparative examples are provided for the purpose of further illustrating the present invention but are in no way to be taken as limiting.

The (a) particle size distribution and average secondary particle diameter and (b) X-ray structural analysis of the hydrotalcite particles were measured by the following methods.

(a) Particle size distribution and average secondary particle diameter

These were measured by using the UPA-UT151 particle size distribution apparatus (dynamic light scattering method, frequency analysis) of Nikkiso Co., Ltd. and the Micro-track MT3300EX II (laser diffraction method) of Nikkiso Co., Ltd. Ion exchange water was used as a solvent at the time of measurement, and hydrotalcite slurry was measured after 5 minutes of an ultrasonic treatment. Measurement was made a total of two times, and the average measurement value is taken as the average secondary particle diameter of a specimen.

(b) X-ray structural analysis

The RINT2200V of Rigaku Corporation was used.

Example 1

By using the ULREA SS-11 micro-reactor, a mixed aqueous solution of magnesium chloride having a concentration of 0.688 mol/L and aluminum sulfate having a concentration of 0.172 mol/L was supplied at a flow rate of 10 ml/min and an alkaline mixed solution of 0.300N caustic soda and sodium carbonate having a concentration of 0.017 mol/L was supplied at a flow rate of 250 ml/min as raw materials to carry out a reaction at a reaction temperature of 20°C, a reactive site clearance of 10 $\mu$m and a rotary disk revolution of 1,700 rpm so as to obtain slurry.

The obtained slurry was separated by sedimentation by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co., Ltd., particles having an average secondary particle diameter of 19.8 nm were obtained. When they were analyzed by means of an X-ray diffraction apparatus, they were hydrotalcite particles represented by the following formula. $Mg_{0.70}Al_{0.30}(OH)_2(CO_3)_{0.15} \cdot 0.49H_2O$

Example 2

By using the above ULREA SS-11, a 20°C mixed aqueous solution of magnesium chloride having a concentration of 0.688 mol/L and aluminum sulfate having a concentration of 0.172 mol/L was supplied at a flow rate of 10 ml/min and an alkaline mixed solution of 0.300N caustic soda and sodium carbonate having a concentration of 0.017 mol/L was supplied at a flow rate of 250 ml/min and an aqueous solution temperature of 77 °C as raw materials to carry out a reaction at a reactive site clearance of 10 $\mu$m and a rotary disk revolution of 1,700 rpm so as to obtain slurry.

The obtained slurry was separated by sedimentation by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co., Ltd., particles having an average secondary particle diameter of 30.1 nm were obtained. When they were analyzed by means of an X-ray diffraction apparatus, they were hydrotalcite particles represented by the following formula. $Mg_{0.70}Al_{0.30}(OH)_2(CO_3)_{0.05} \cdot 0.49H_2O$

Example 3

By using the above ULREA SS-11, a mixed aqueous solution of magnesium chloride having a concentration of 0.516 mol/L and aluminum sulfate having a concentration of 0.129 mol/L was supplied at a flow rate of 10 ml/min and an alkaline mixed solution of 0.225N caustic soda and sodium carbonate having a concentration of 0.013 mol/L was supplied at a flow rate of 250 ml/min as raw materials to carry out a reaction at a reaction temperature of 35°C, a reactive site clearance of 10 $\mu$m and a rotary disk revolution of 1,700 rpm so as to obtain slurry.

The obtained slurry was separated by sedimentation by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co., Ltd., particles having an average secondary particle diameter of 69.5 nm were obtained. When they were analyzed by means of the RINT2200V X-ray diffraction apparatus of Rigaku Corporation, they were hydrotalcite particles represented by the following formula.

$$Mg_{0.70}Al_{0.30}(OH)_2(CO_3)_{0.15} \cdot 0.49H_2O$$

Comparative Example 1

By using the above ULREA SS-11, a mixed aqueous solution of magnesium chloride having a concentration of 1.032 mol/L and aluminum sulfate having a concentration of 0.258 mol/L was supplied at a flow rate of 50.0 ml/min and an alkaline mixed solution of 2.703N caustic soda and sodium carbonate having a concentration of 0.154 mol/L was supplied at a flow rate of 55.8 ml/min as raw materials to carry out a reaction at a reaction temperature of 35°C, a reactive site clearance of 10 $\mu$m and a rotary disk revolution of 1,700 rpm so as to obtain slurry.

The obtained slurry was separated by sedimentation by means of a centrifugal separator and washed with ion exchange water. When solid matter obtained after washing was emulsified with ion exchange water, ultrasonically treated for 5 minutes and then measured by means of the UPA-UT151 particle size distribution apparatus (dynamic light scattering method, frequency analysis) of Nikkiso Co. , Ltd., particles having an average secondary particle diameter of 344 nm were obtained. When they were analyzed by means of the RINT2200V X-ray diffraction apparatus of Rigaku Corporation, they were hydrotalcite particles represented by the following formula.

$$Mg_{0.67}Al_{0.33}(OH)_2(CO_3)_{0.17} \cdot 0.5H_2O$$

Comparative Example 2

Like Example 3, 10 ml of a mixed aqueous solution of magnesium chloride having a concentration of 0.516 mol/L and aluminum sulfate having a concentration of 0.129 mol/L was injected into 250 ml of an alkaline mixed solution of caustic soda having a concentration of 0.225 mol/L and sodium carbonate having a concentration of 0.013 mol/L under agitation over 1 minute to carry out a batch reaction at 35°C in an ordinary beaker as a reactor so as to obtain slurry.

The obtained slurry was separated by sedimentation by means of a centrifugal separator and washed with ion exchange water. Solid matter obtained after washing was re-emulsified with ion exchange water to obtain slurry. When the particle size was measured by a laser diffraction scattering method using the Micro-track MT3300EX II of Nikkiso Co., Ltd., the average secondary particle diameter was 3,818 nm. When the particles were analyzed by means of the RINT2200V X-ray diffraction apparatus of Rigaku Corporation, they were hydrotalcite particles represented by the following formula.

$$Mg_{0.70}Al_{0.30}(OH)_2(CO_3)_{0.15} \cdot 0.48H_2O$$

Table 1

| | Reactor | Average secondary particle diameter(nm) | Molar ratio of alkali substance and metals (Mg+Al) |
|---|---|---|---|
| Example 1 | Micro-reactor | 19.8 | 7.27 |
| Example 2 | Micro-reactor | 30.1 | 7.26 |
| Example 3 | Micro-reactor | 69.5 | 7.27 |
| Comparative Example 1 | Micro-reactor | 344 | 1.95 |
| Comparative Example 2 | Beaker | 3818 | 7.27 |

Nano-particles having an average secondary particle diameter of less than 100 nm could be obtained by carrying out the crystallization reaction of hydrotalcite with the ULREA SS-11 micro-reactor of M Technique Co., Ltd.

Effect of the Invention

According to the production process of the present invention, hydrotalcite particles having an average secondary particle diameter (measured by a frequency analyzing method) of 1 to 100 nm, preferably 10 to 90 nm are obtained.

When the hydrotalcite particles obtained by the prior art method are milled, they contain a contaminant produced by contact with a milling medium. Hydrotalcite particles obtained by adding an additive containing an organic substance has a possibility that the additive may function as an impurity. On the other hand, as hydrotalcite particles obtained by the present invention are synthesized through a reaction using conventional hydrotalcite raw materials, they do not contain a contaminant and nano-particles are obtained without adding any additive.

Since the hydrotalcite particles obtained by the present invention have an extremely small size of not more than 100 nm and high transparency, it can be expected that a molded article having higher transparency than that obtained from conventional hydrotalcite having a size of not less than 100 nm can be obtained.

While hydrotalcite particles produced through a reaction using a conventional reactor have poor dispersibility and become agglomerated particles, hydrotalcite fine particles having high dispersibility can be provided by the present invention.

Since the hydrotalcite particles of the present invention have an extremely small particle size of several tens of nm, they can be expected to be used in fields in which submicron-order particles cannot be used, such as small-sized electronic equipment and thin films. Since they have a very small particle size, they have high transparency and therefore it is conceivable to use the particles in fields in which transparency is required.

Industrial Applicability

The hydrotalcite particles of the present invention can be used as a heat stabilizer, heat deterioration resistance agent, heat conducting agent, acid acceptor, adsorbent, thickener, flame retardant or reinforcing agent.

Explanation of letters or numerals

1    first processing surface
2    second processing surface
3    discharge port
4    rotary disk
5    fixed disk
A    mixed aqueous solution of a magnesium salt and an aluminum salt
B    alkali substance and interlaminar anion

**Claims**

1.  A process for producing hydrotalcite particles having an average secondary particle diameter measured by a frequency analyzing method of 1 to 100 nm, comprising reacting a mixed aqueous solution of a magnesium salt and an aluminum salt with an alkali substance and an interlaminar anion in a forced thin-film type micro-reactor having a reactive site clearance of 1 to 30 $\mu$m.

2.  The production process according to claim 1, wherein the molar ratio of the alkali substance to the total of metal magnesium and metal aluminum is 2 to 15.

3.  The production process according to claim 1, wherein the forced thin-film type micro-reactor has a reactive site formed by a first processing surface (1) and a second processing surface (2) which are opposed to each other, turn relative to each other and can approach or part from each other relatively, and produces force in a direction that the two processing surfaces part from each other by the supply pressure of the raw materials and a separate force is applied for moving the two processing surface in a direction that they approach each other, so that the reactive site is kept in a very small space.

Fig. 1

## INTERNATIONAL SEARCH REPORT

| | International application No. |
|---|---|
| | PCT/JP2013/059790 |

A. CLASSIFICATION OF SUBJECT MATTER
*C01F7/00*(2006.01)i, *C08K3/24*(2006.01)i, *C08K9/04*(2006.01)i, *C08L101/00*
(2006.01)i, *C09C1/00*(2006.01)i, *C09C1/02*(2006.01)i, *C09C1/40*(2006.01)i,
*C09C3/08*(2006.01)i, *C09C3/12*(2006.01)i
According to International Patent Classification (IPC) or to both national classification and IPC

B. FIELDS SEARCHED

Minimum documentation searched (classification system followed by classification symbols)
C01F7/00, C08K3/24, C08K9/04, C08L101/00, C09C1/00, C09C1/02, C09C1/40,
C09C3/08, C09C3/12

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-106620 A  (Sakai Chemical Industry Co., Ltd.), 26 April 2007 (26.04.2007), entire text (Family: none) | 1-3 |
| A | JP 2006-2336 A  (Dorlastan Fibers GmbH), 05 January 2006 (05.01.2006), entire text & US 2005/0288417 A1      & EP 1607499 A1 & DE 102004029274 A      & CA 2510039 A & KR 10-2006-0046472 A    & CN 1782148 A & SG 118374 A             & MX PA05006539 A & CA 2510039 A1 | 1-3 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 30 May, 2013 (30.05.13) | Date of mailing of the international search report 11 June, 2013 (11.06.13) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/059790 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2011/111487 A1  (Kyowa Chemical Industry Co., Ltd.),<br>15 September 2011 (15.09.2011),<br>entire text<br>& US 2013/0041081 A      & EP 2546296 A<br>& CA 2792054 A            & CN 102834443 A<br>& KR 10-2013-0008580 A   & MX 2012010321 A | 1-3 |
| A | JP 2009-143798 A  (Sud-Chemie AG.),<br>02 July 2009 (02.07.2009),<br>entire text<br>& US 2009/0162658 A1      & GB 2457771 A<br>& DE 102007059990 A       & CN 101456539 A<br>& DK 200801718 A | 1-3 |
| A | JP 2008-162825 A  (Kao Corp.),<br>17 July 2008 (17.07.2008),<br>entire text<br>(Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49003760 A
- JP 61174270 A
- WO 99015909 A
- JP 2009131831 A